(19) Europäisches Patentamt
European Patent Office
Office européen des brevets

(11) **EP 4 340 195 B1**

(12) # EUROPEAN PATENT SPECIFICATION

(45) Date of publication and mention
of the grant of the patent:
**31.12.2025 Bulletin 2026/01**

(51) International Patent Classification (IPC):
$H02M\ 1/00^{(2006.01)}$  $H02M\ 1/32^{(2007.01)}$
$H02M\ 1/36^{(2007.01)}$  $H02M\ 3/335^{(2006.01)}$
$H02M\ 3/00^{(2006.01)}$  $H02M\ 1/42^{(2007.01)}$

(21) Application number: **22196403.4**

(22) Date of filing: **19.09.2022**

(52) Cooperative Patent Classification (CPC):
**H02M 1/0009; H02M 1/32; H02M 1/36; H02M 3/01;
H02M 3/33523; H02M 3/33571; H02M 3/33576;**
H02M 1/007; H02M 1/342; H02M 1/4225

(54) **POWER CONVERTER CONTROLLER, POWER CONVERTER AND METHOD OF OPERATING A POWER CONVERTER**

STROMRICHTERSTEUERGERÄT, STROMRICHTER UND VERFAHREN ZUM BETRIEB EINES STROMRICHTERS

CONTRÔLEUR DE CONVERTISSEUR DE PUISSANCE, CONVERTISSEUR DE PUISSANCE ET PROCÉDÉ DE FONCTIONNEMENT D'UN CONVERTISSEUR DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2024 Bulletin 2024/12**

(73) Proprietor: **Infineon Technologies Austria AG
9500 Villach (AT)**

(72) Inventors:
• **HONG, Shi-Heng
241 New Taipei City (TW)**
• **YUAN, Xiang
750327 Singapore (SG)**
• **HSIAO, Yi-Chou
105 Taipei City (TW)**
• **MEDINA-GARCIA, Alfredo
81737 München (DE)**
• **CHUNG, Po-Jung
234 New Taipei City (TW)**

(74) Representative: **Kraus & Lederer PartGmbB
Thomas-Wimmer-Ring 15
80539 München (DE)**

(56) References cited:
**US-A1- 2010 110 593    US-A1- 2010 315 843
US-A1- 2015 168 476    US-A1- 2017 163 144**

## Description

TECHNICAL FIELD

The present application relates to controllers for power converters, power converters including such controllers and to corresponding methods of operating power converters. In some implementations, the present application relates to detecting error conditions in such power converters.

BACKGROUND

Power converters are used in many applications to convert an input electrical power to an output electrical power, which is appropriate for a respective appliance or device with respect to voltage, current or both. For example, charger devices for smartphones or tablets or power supplies for computers, laptops and a plurality of other devices convert an input power, typically a mains power, to an appropriate output power (voltage and current). For instance, the mains power typically is an AC (alternating current) power with a voltage ranging between 100 V and 300 V depending on country, and output voltages required may be in a range from 3 V to 20 V DC (direct current), depending on application. Sometimes, power converters include a plurality of stages, for example a so called power factor correction stage providing an intermediate voltage, also referred to as bus voltage, and a second stage performing the actual regulation to a desired output voltage.

Some power converters include a primary side, sometimes also referred to as input side, which receives the input voltage, and a secondary side which is coupled to a load and which outputs the output voltage. In many applications, a galvanic isolation between primary side and secondary side may be provided, for example by a transformer. Power converters include for example buck converters, boost converters, buck-boost converters or flyback converters like asymmetric half-bridge flyback converter.

With such power converters error conditions may occur, which depending on application are required to be detected, such that measures like setting the power converter to a predefined state, issuing a warning, performing a restart of the power converter or the like may be performed. Such error conditions may for example include a short circuit condition where a load coupled to the power converter provides a short circuit, i.e. a very low ohmic connection between output terminals of the power converter or an output terminal of the power converter providing a positive voltage and ground. Another example error condition is an open loop condition, where a feedback from the output voltage to a controller of the power converter is defective, which may lead to an inaccurate regulation of the output voltage.

US 2017/163144 A1 discloses a controller for isolated power supplies, wherein the controller is configured to detect a fault condition by comparing a feedback signal to a fault reference and control a power switch based on the feedback signal.

US 2010/315843 A1 discloses a method for detecting an output short circuit of a power supply by evaluating a current sense signal.

US 2010/110593 A1 discloses a protection circuit for power factor correction, wherein an excessive current is detected by comparing the current to a predetermined threshold value.

In conventional solutions, for detecting such error conditions an output voltage of the power converter is compared to a threshold voltage. However, this approach may be problematic in some instances, for example for power converters providing a variable output voltage like battery chargers suitable for a plurality of different battery types requiring different charging voltages. In such applications, it may be difficult to discern an error case from a changing output voltage, and even variable threshold values are adapted to output voltages detecting of error conditions may sometimes still be problematic.

SUMMARY

A controller for a power converter as defined in claim 1, a power converter as defined in claim 9 and a method as defined in claim 11 are provided. The dependent claims define further embodiments.

According to an embodiment, a controller for a power converter is provided, comprising:

a terminal configured to receive an indication signal of one of an output voltage or output current of the power converter, and
a control logic configured to derive a measure of a slope of the one of the output voltage or output current based on the indication signal of one of the output voltage or output current, and to detect and error condition of the power converter based on the measure of the slope. The controller further comprises a terminal configured to receive a feedback signal indicating if the one of the output voltage or output current is to be increased or decreased, wherein the control logic is configured to detect the error condition only when the feedback signal is above a predefined threshold.

According to a further embodiment, a power converter including such a controller is provided.

In yet another embodiment, a method for operating a power converter is provided, comprising:

receiving an indication signal of one of an output voltage or output current of the power converter, deriving a measure of a slope of the one of the output voltage or output current based on the indication signal of the one of the output voltage or output current, and
detecting an error condition of the power converter based on the measure of the slope. The method further comprises receiving a feedback signal indicating if the one of the output voltage or output current is to be increased or decreased, wherein detecting the error condition comprises detecting the error condition only when the feedback signal is above a predefined threshold.

The above summary is merely a brief overview over some embodiments and is not to be construed as limiting in any way, as other embodiments may include other features than the ones explicitly listed above. The invention is only limited by the appended claims.

BRIEF DESCRIPTION OF THE DRAWINGS

Fig. 1 is a block diagram of a power converter according to an embodiment.
Fig. 2 is a flowchart illustrating a method according to an embodiment.
Fig. 3 is a circuit diagram illustrating a power converter according to an embodiment.
Fig. 4 is a circuit diagram illustrating a part of a power converter according to an embodiment.
Fig. 5 is a signal diagram illustrating an example operation of a power converter according to an embodiment.
Fig. 6 is a diagram illustrating error detection according to some embodiments.
Fig. 7 is a diagram illustrating error detection according to some embodiments.
Fig. 8 is a flowchart illustrating a method of error detection according to some embodiments.
Figures 9 and 10 are signal diagrams for illustrating problems overcome or mitigated by some embodiments.
Figures 11, 12A, 12B and 13 are signal diagrams illustrating example operations and error detection of a power converter according to an embodiment. The invention is only limited by the appended claims.

DETAILED DESCRIPTION

In the following, various embodiments will be described in detail referring to the attached drawings. These embodiments are given by way of example only and are not to be construed as limiting in any way.

While embodiments are described including a plurality of features (elements, components, steps, acts, events, signals etc.), in other embodiments some of these features may be omitted, or may be replaced by alternative features. For example, some embodiments are described in the context of specific types of power converters, but techniques discussed herein for error detection may also be applied to other kinds of power detectors. Furthermore, in addition to the features explicitly shown and described, further features may be provided, for example features of conventional power converters and associated methods. For instance, the present application focuses on detection of an error condition in a power converter, and other aspects like the general configuration of the power converter or the operation of the power converter outside error conditions like the regulation of an output voltage may be implemented in any conventional manner.

Features from different embodiment may be combined to form further embodiments. Variations, modifications or details described with respect to one of the embodiments are also applicable to other embodiments and will therefore not be described repeatedly.

Couplings or connections described herein refer to electrical connections or couplings unless noted otherwise. Such connections or couplings as shown in the drawings or described herein may be modified, for example by the addition or removal of components, as long as the general function of the connection or coupling, for example to provide a certain kind of signal, to provide a voltage, to provide power etc. is essentially maintained.

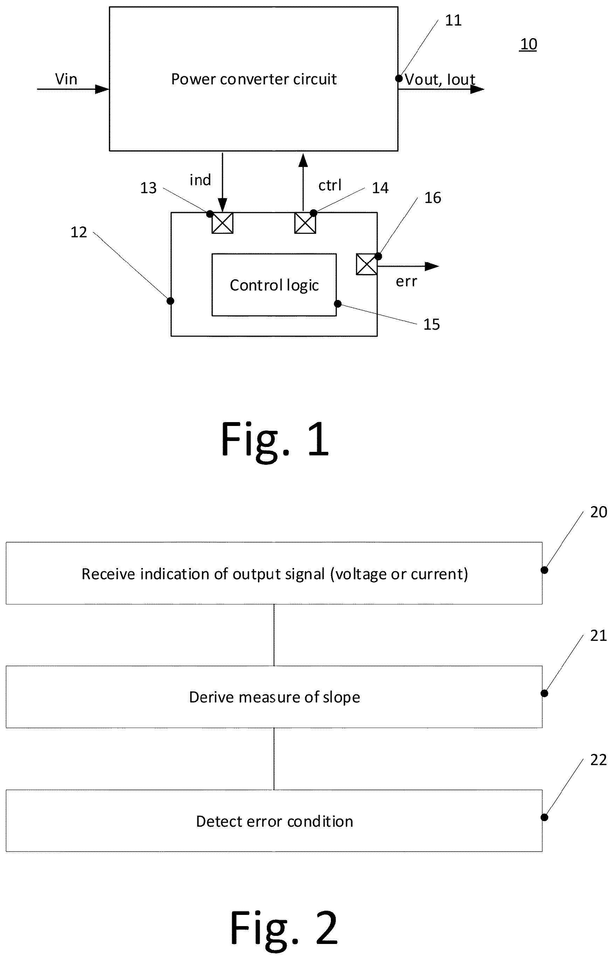

Turning now to the Figures, Fig. 1 is a block diagram of a power converter 10 according to an embodiment. Power converter 10 includes a power converter circuit 11 controlled by a controller 12, using one or more control signals ctrl output from one or more control terminals 14. Power converter circuit 11 may be any kind of power converter, for example of any of the types mentioned above in the background section, for example a power converter with galvanic isolation between a primary side and a secondary side. Power converter circuit 11 receives an input voltage Vin, for example at a primary side thereof, and controlled by controller 12 converts the input voltage to an output voltage Vout for example output from a secondary side thereof at a current Iout. This operation may be performed in any conventional manner. Conversion of voltage is merely an example, and in other embodiments a desired output current and/or a desired output power may be provided. In many applications, either the output voltage Vout or the output current Iout is regulated to a predefined or desired value.

The term controller may refer to a single entity, which may be provided for example on a primary side or a secondary side of a power converter, but also may refer to a plurality of entities communicating with each other, for example a primary side controller and a secondary side controller communicating with each other. In this respect, in particular in case of a galvanic isolation, a primary side controller is an entity of the primary side, galvanically separated from the secondary side, and a secondary side controller is an entity of the secondary side, galvanically isolated from the primary side.

Furthermore, controller 12 receives an indication signal ind of one of the output voltage Vout or output current Iout from power converter circuit 11 at a terminal 13. In some implementations, when the output voltage Vout is regulated, an indication signal of the output voltage Vout is used, and when the current Iout is regulated, an indication signal of the output current Iout is used. "Indication signal of one of the output voltage or output current" refers to any signal which gives quantitative information about the one of the output voltage or output current, i.e. which indicates a magnitude of the output voltage or output current. Indication signal ind may be obtained for example by a direct measurement of the output voltage Vout or output current Iout, but also from indirect measurements using for example an auxiliary winding of a transformer, a resonant capacitor or a current on a primary side of the power converter, as will be explained below.

A control logic 15 of controller 12 uses indication signal ind to detect an error condition like a short circuit condition, an open circuit condition (disconnected load) or an open-loop condition of power converter 10. Besides this detection of an error condition, indication signal ind may also be used for any conventional purposes. Unlike some conventional approaches which merely compare the output voltage or output current as given by the indication signal with a threshold voltage, controller 12, in particular control logic 15 thereof derives a measure of a slope of the one of the output voltage or output current from the indication signal and detects the error condition based on the measure of the slope. A corresponding method, which may be implemented using control logic 15 of controller 12, is shown in Fig. 2. Controller 12, in particular control logic 15, may be implemented in hardware, for example as an application specific circuit, in software, for example by a corresponding microcontroller programmed accordingly, or combinations thereof.

While the method of Fig. 2 will be described in the context of Fig. 1, application of the method of Fig. 2 is not limited to power converter 10 of Fig. 1, but may also be implemented in other power converters, for example power converters as described further below. At 20, the method of Fig. 2 comprises receiving an indication signal of one of an output voltage or output current of the power converter, for example indication signal ind of Fig. 1.

At 21, the method comprises deriving a measure of a slope of the one of the output voltage or output current based on the indication signal. A measure of a slope, as used herein, refers to a quantity which gives information about the slope of the output voltage or output current, in particular about how fast the output voltage or output current falls or rises over time. In a simple case, the measure of the slope is calculated as the derivative of the output voltage or output current (based on the output voltage or output current as given by the indication signal) over time. However, other quantities may be used as well. For example, in some embodiments, again based on the output voltage or output current as given by the indication signal, a mean value of the output voltage or output current over time may be calculated, and the measure of the slope may be the current (i.e. actual or momentary) value of the output voltage or output current together with the mean value: If the current (actual) voltage or output current is greater than the mean value by a certain amount, this may indicate a fast rising slope, and if the output voltage or output current is below the mean value by more than a predefined amount, this may indicate a fast falling of the output voltage or output current or, in other words, a high negative slope.

At 22, the method comprises detecting an error condition based on the measure of the slope. For example, an error condition may be detected if an absolute magnitude of the slope is above a threshold value. In some embodiments, a type of error condition may be determined on whether the slope is positive or negative, and/or different thresholds or varying thresholds, for example thresholds based on a magnitude of the output voltage Vout or output current Iout, may be used. Also, besides the measure of the slope, further parameters may additionally be used for detecting the error condition, for example a feedback voltage as will also be discussed further below. In other embodiments, as additional criterion for detecting an error condition it may be required that the output voltage or output current changes at least by a predefined amount, to prevent small ripples with steep slopes being detected as errors.

In case an error condition is detected, measures may be taken. For example, an error signal err may be output at a terminal 16 of controller 12 of Fig. 1, to notify other entities of the error. In other embodiments, the power converter may be set to a predefined state, for example a latched state, or restarted in response to detecting the error condition, for example using control signal(s) ctrl of Fig. 1.

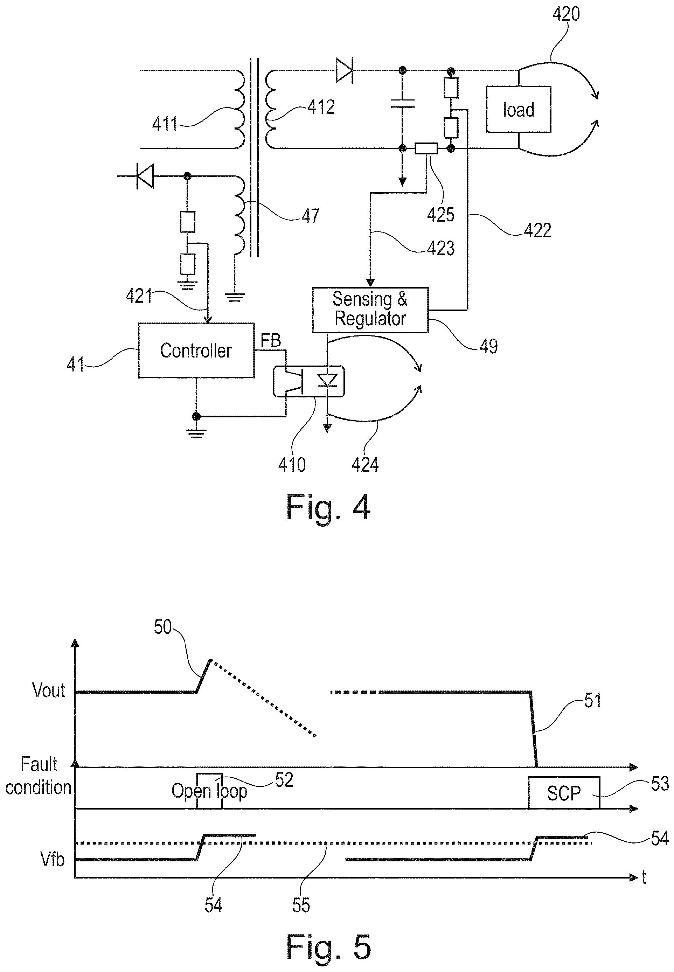

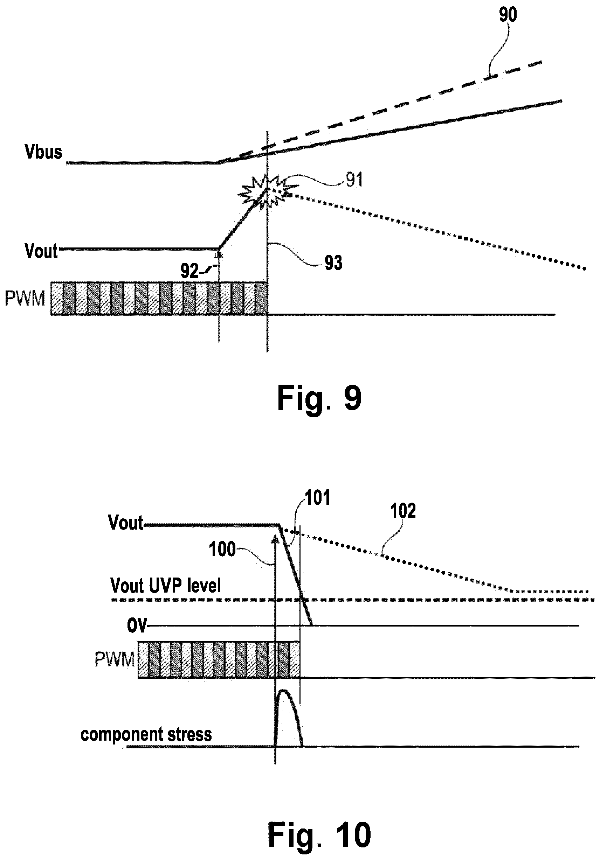

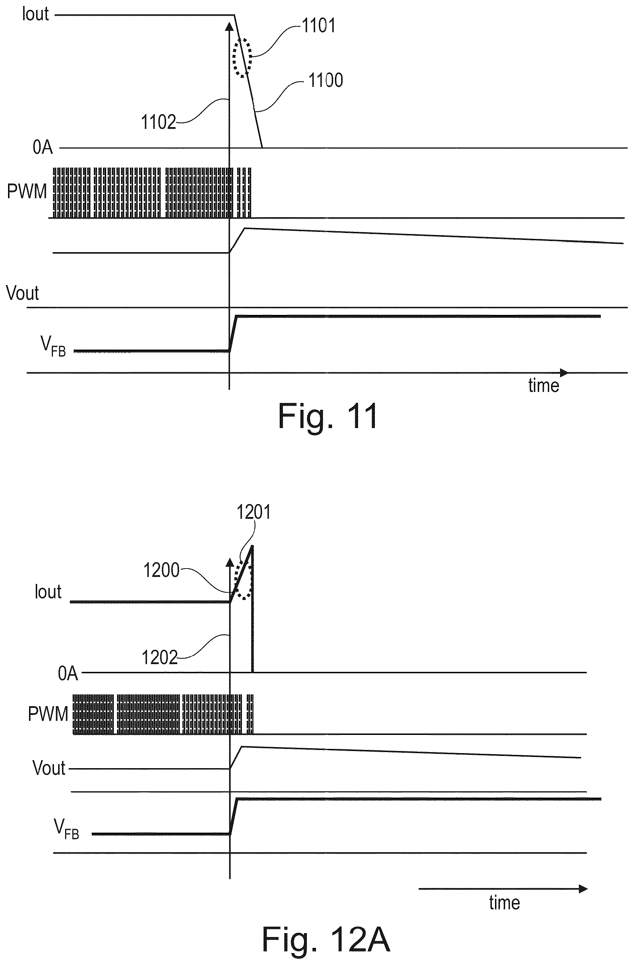

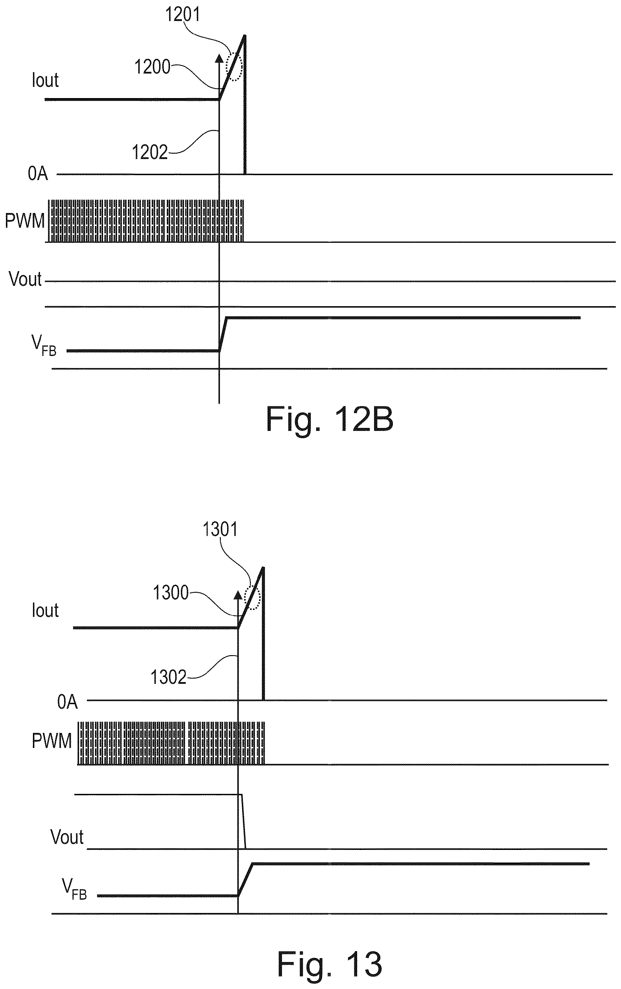

Next, more specific embodiments will be described giving implementation examples for the techniques discussed above with reference to Figures 1 and 2. The embodiments of Figs. 5 to 8 and the situations illustrated in Figs. 9 and 10 use an indication signal of the output voltage and a measure of the slope of the output voltage. As will be indicated in some instances, the illustrated approaches may also be adapted to using the output current, and specific explanations for the output current will be given further below referring to Figs. 11 and 12. As mentioned above, using the output voltage may be done in implementations where the output voltage is regulated to a certain value (predefined, set by a user, received from other entities etc.), and using the output current may be done in implementations where the output current is regulated to a certain value.

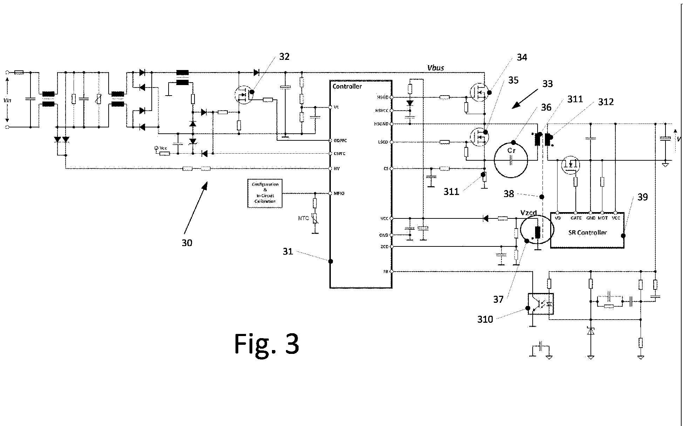

Fig. 3 shows an example embodiment of a power converter including an asymmetric half-bridge flyback converter and a power factor correction stage. While the circuit diagram of Fig. 3 shows many details, in other embodiments other implementations and other types of power converters may be used.

The power converter of Fig. 3 includes a first power stage 30 for receiving an input voltage Vin and generating a bus voltage Vbus as shown. First power stage 30 includes filters, rectifying diodes and a power factor correction which is controllable by a controller 31 controlling a transistor 32. A primary side of a second power stage, e.g. of an asymmetric half-bridge flyback converter 33, includes a high-side switch transistor 34 and a low-side switch transistor 35 controlled by controller 31 in a conventional manner. On a secondary side, a synchronous rectifier (SR) controller 39 controls rectification. A regulator output, where the regulator is formed at least in part by the RC network shown, based on the output voltage Vout is fed back to controller 31 via an optocoupler 310, to regulate the output voltage. In particular, the feedback may indicate if the output voltage is to be increased or decreased.

The primary side and the secondary side in the embodiment of Fig. 3 are separated by a transformer 38 including a primary side winding 311, a secondary side winding 312 and an auxiliary winding 37, the auxiliary winding being provided on the primary side. A shunt resistor 311 may be used by controller 31 to measure a primary side current. From this primary side current, an indication signal of the output current useable in some embodiments may be obtained by measurements on the primary side. In particular, the output current Iout may be estimated according to:

$$\text{Iout} = \frac{N(I_{hb\_p} + I_{hb\_n})}{2} \frac{T_a}{T}$$

where N is the winding ratio of the transformer, T is a length of a switching period of high-side switch transistor 34 and low-side switch transistor 35, $I_{hb}$ is the current supplied to the primary side winding as measure via shunt resistor 311, $I_{hb,n}$ and $I_{hb,p}$ are positive and negative extremal values of the current $I_{hb}$, and $T_a$ is a duration of a first part of period T when $I_{hb}$ approximately returns to zero.

Each of controller 31 or controller 39 may be a controller performing an error condition detection as explained above.

It should be noted that the feedback signal received via optocoupler 310 in some implementation may be a simple indication signal if the output voltage is to be increased or decreased, and in some implementations cannot be used as an indication signal of the output voltage from which a measure of the slope may be derived.

In case controller 39 or another controller on a secondary side is to be used, controller 39 may measure the output voltage directly for example using a resistive divider as will be explained further below with respect to Fig. 4. Controller 31, which is provided on the primary side of flyback converter 33, cannot directly measure the output voltage in such a way, as this would break the galvanic isolation. Therefore, in embodiments other indication signals of the output voltage may be used.

For example, in some embodiments controller 31 may use the voltage Vzcd at auxiliary winding 37, which is applied to an input ZCD of controller 31, as a measure of the output voltage. The voltage Vzcd is related to the output voltage according to Vzcd=Vout (Naux/Ny), where Vout is the output voltage, and Naux is a number of windings of auxiliary winding 37, and Ns is a number of windings of secondary side winding 312. As Naux and Ns are known by design, Vzcd gives a measure of the output voltage.

In another embodiment, a voltage at capacitor 36, referred to as resonant capacitor in the context of flyback converters, may be measured and used as an indication signal of the output voltage. The voltage across resonant capacitor 36, Vcr, is related to the output voltage Vout via Vcr=N x Vout, where N is the ratio of windings of primary side windings 311 to windings of secondary side winding 312.

Therefore, various indication signals may be used by controller 31 or controller 39, or any other controller provided in the system, as indication signal of the output voltage, which then may be used by the respective controller to derive the measure of the slope and to detect an error condition, as will be described in the following in some more detail.

Fig. 4 shows a part of a power converter according to an embodiment, which may be a power converter similar to the one shown in Fig. 3.

In particular, Fig. 4 illustrates a part of a converter like a flyback converter having a primary side and a secondary side separated by a transformer. The transformer includes a primary side winding 411, a secondary side winding 412, and an auxiliary winding 47. If implemented as shown in Fig. 3, windings 411, 412 and 47 may correspond to windings 311, 312 and 37 of Fig. 3, respectively. As shown, from the secondary side a load is supplied with an output voltage of the power converter.

A sensing and regulator controller 49 is provided on the secondary side, which may include a functionality of a synchronous rectifier controller 39 of Fig. 3 and/or a regulation function of the RC network coupled to optocoupler 310 of Fig. 3. A feedback from the secondary side is provided to a primary side controller 41 using an optocoupler 410, to preserve the galvanic isolation.

Besides conventional control functions, controller 41 or controller 49 may also perform an error detection based on a measure of the slope of the output voltage as generally discussed above. Controller 41, as indicated by an arrow 421, may obtain a measure of the output voltage from auxiliary winding 47. Alternatively, as explained with reference to Fig. 3, a resonant voltage at a resonant capacitor, if present, may be used as a measure of the output voltage. Controller 49 may measure the output voltage directly as via a resistive divider via a connection 422, or measure the output current directly using for example a shunt resistor 425 as indicated by an arrow 425.

Error conditions that may be detected include a short circuit condition and an open loop condition. A short circuit error condition is present when the load is short-circuited, i.e. provided a very low resistance, as indicated by arrows 420. An open loop error condition is present for example if optocoupler 410 does not operate correctly, for example if a light emitting diode of optocoupler 410 is short-circuited as indicated by an arrow 424. The behaviour of the output voltage in case of such error conditions is illustrated in Fig. 5.

A curve shown topmost in Fig. 5 illustrates the output voltage Vout over time. In a time area 52, an open loop error condition occurs, and in a time area 53 a short circuit error condition occurs.

As indicated by reference numeral 50, during an open loop error condition the output voltage increases sharply. The reason basically is that due to the open loop condition, the controller receives a high feedback signal as indicated by a curve 54, indicating that the output voltage is to be increased. The high feedback is due to the fact that as the phototransistor of optocoupler 410 is not conducting, the feedback voltage is not drawn to ground via the photo transistor. In other embodiments, digital feedback signals may be used, which may us any logic (e.g. logic 1 for demanding an increase of output voltage/current and logic 0 for demanding a decrease of output voltage/current, or vice versa). This rapid increase of the output voltage may be detected by a controller like controllers 41, 49, 31, 39 or 12 discussed previously, when the measure of the slope indicates a positive slope above a threshold value.

In case of a short circuit error condition in time period 53, as shown by reference numeral 51 the output voltage Vout decreases rapidly. This error condition therefore may be detected if the measure of the slope indicates a negative slope, the absolute value of which is above a further threshold value.

In other embodiments, no distinction between error cases may be made, and for example an error condition may be detected if the measure of the slope indicates a slope with an absolute value above a threshold. In other embodiments, additionally or alternatively the threshold value(s) may be variable, for example, depending on an output voltage prior to the error condition. For example, for lower output voltages lower threshold values may be used, while for higher output voltages higher threshold values may be used.

Also in case of a short circuit, as again indicated by curve 54 the feedback signal goes too high, requesting an increase of the output voltage (as the output voltage drops). Therefore, in both cases a feedback voltage Vfb received for example at a terminal FB of controller 41 goes to a high level. In the claimed invention, this is used as an additional criterion for detecting an error condition, for example to reduce the probability of wrong detections. For example, an open loop condition may be detected if the slope of the output voltage is above a threshold value and the feedback voltage Vfb is above a threshold value as indicated by a dotted line 55, and a short circuit condition may be detected if the slope is negative and its absolute value is above a further threshold value, and the feedback voltage Vfb is above the threshold indicated by dotted line 55. In cases where a reverse logic, e.g. a digital logic as mentioned above, instead of the feedback signal above the threshold indicated by dotted line 55, a feedback signal below a threshold may be used as criterion, depending on the signaling used.

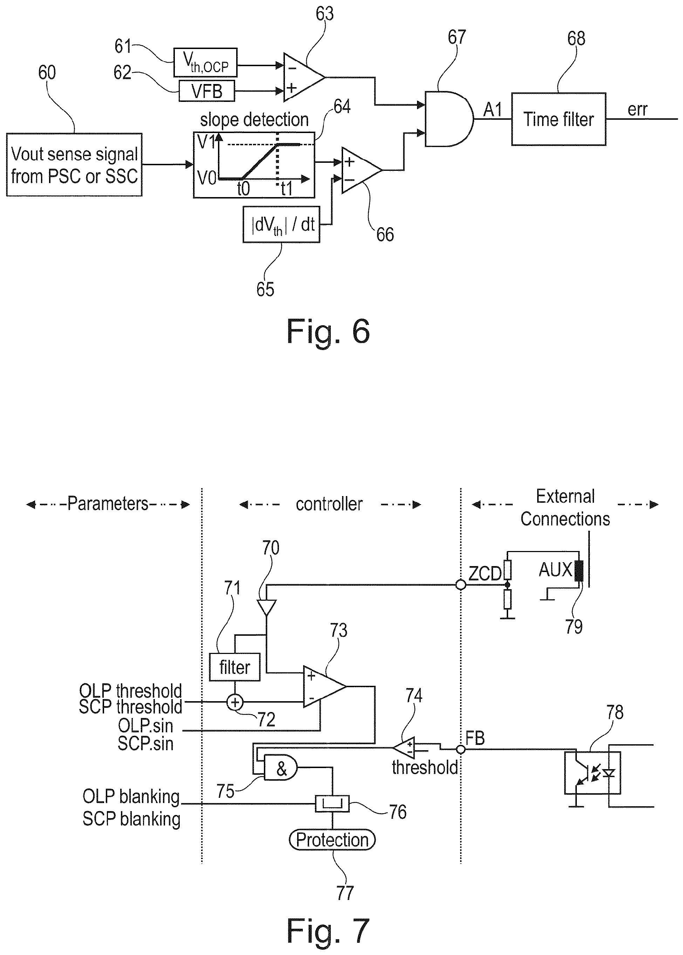

A schematic logic diagram illustrating this detection is shown in Fig. 6. For simplicity's sake, Fig. 6 uses a single threshold value for the absolute slope of the output voltage.

As inputs, the logic of Fig. 6 receives a measure of the output voltage 60, received at a primary side controller, a secondary side controller or both. Furthermore, the logic receives, as an input, the feedback voltage Vfb at 62.

As parameters, the logic of Fig. 6 uses a threshold value for the feedback value 61, also named $V_{th,OCP}$, and a threshold value 65, $|dV_{th}/dt|$, for the slope. Threshold 65 may be adapted to the measure (e.g. as regards scaling or units) and the kind of slope detection (e.g. for open loop error condition or short circuit error condition detection).

Based on the indication signal 60 of the output voltage, a slope detection 64 determines the measure of the slope. For example, in the embodiment of Fig. 6, slope detection 64 may be a differentiator calculating the slope dVout/dt. A comparator 66 compares the measure of the slope to threshold 65, and if the measure of the slope exceeds the threshold, outputs a logic 1 and else a logic 0. For simplicity's sake, in the above explanation the measure of the slope directly is the slope as determined by slope detection 64, in some arbitrary units. As mentioned above, other measures may be used as well, for example an average value together with an current value, in which case for example thresholds used need to be adapted accordingly. For example, in case an average value and a current value is used, a threshold used determines by how much the current value has to differ from the average value such that an error condition is detected.

A comparator 63 compares the feedback voltage 62 with the threshold value 61 and outputs a logic 1 if the feedback voltage exceeds the threshold value (corresponding for example to Vfb exceeding threshold 55 in Fig. 5), and a logic 0 otherwise. The outputs of comparators 63, 66 are provided to an AND gate 67. Therefore, an output signal A1 of AND gate 67 is at logic 1 if both the slope output by slope detection 64 is above threshold 65 and the feedback voltage 62 is above threshold 61, thus using two criteria for detecting an error condition.

In some embodiments, optionally a time filter 68 may be provided to filter signal A1 such that an error signal err output by time filter 68 only indicates an error condition (for example being at logic 1) if signal A1 is at logic 1 for a certain time. For example, time filter 68 may be implemented using a low pass filter, such that very brief error conditions, where for example signal A1 is at logic 1 for only one or two clock cycles of the respective controller, are filtered out, or may be implemented by a counter clocked by a clock, and only after the signal A1 being at logic 1 for a predefined number of counts error signal err indicates an error. Other types of time filters may be used as well.

The logic of Fig. 6 may be implemented in hardware in any of the discussed controllers or may be also be implemented in software, for example by programming a microcontroller accordingly.

Fig. 7 illustrates a further error detection approach implementable in some embodiments. At the left side in Fig. 7, parameters are shown, in the middle, a part implemented in a respective controller (in software, hardware or a combination thereof) is shown, and on the right side external parts of the power converter outside the controller are shown. In the approach of Fig. 7, an average value and a current value of the indication signal of the output voltage are used as a measure of the slope.

In the embodiment of Fig. 7, the controller receives an indication signal of the output voltage at an input ZCD from an auxiliary winding 79 via a resistive divider as shown, and a feedback voltage at a terminal FB from an optocoupler 78 as shown. This corresponds to the embodiment of Fig. 4, auxiliary winding 47 and optocoupler 410, or Fig. 3, auxiliary winding 37 and optocoupler 310.

In the embodiment of Fig. 7, open loop and short circuit use different parameters. For example, the logic of Fig. 7 may be implemented twice, once for open loop error detection and once for short circuit error detection, or may operate in a multiplexing operation, where alternatingly a monitoring for an open loop condition of for a short circuit condition is performed.

As threshold parameters, OLP.threshold for open loop and SCP.threshold for short circuit are used. Enabling signals OLP.en and SCP.en to enable open loop monitoring and short circuit monitoring, respectively, are also provided. Finally, OLP.blanking and SCP.blanking parameters are provided for a time filter function similar to time filter 68 of Fig. 6.

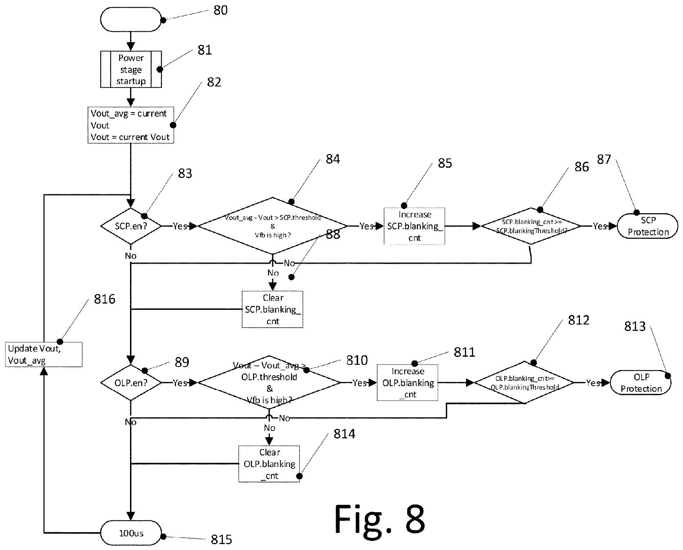

A voltage received at terminal ZCD is buffered by a buffer 70 and provided from buffer 70 to an averaging filter 71 and a positive input of a comparator 73. Averaging filter 71 provides an average of the output of buffer 70 over a plurality of clock cycles. The output of averaging filter 71 is provided to a first input of an adder 72, and the respective threshold (OLP.threshold or SCP.threshold) is provided to a second input of adder 72. An output of adder 72 is provided to a negative input of comparator 73. In this way, comparator 73 determines if the current value provided to the positive input differs to the average value provided by filter 71 by more than the respective threshold. As explained later with respect to Fig. 8, the positive and negative slopes for open loop and short circuit error condition, respectively, may be taken into account by corresponding signs of the addition in adder 72 and/or by reversing the inputs of comparator 73. Comparator 73 is enabled by signals OLP.en and SCP.en, respectively, and if disabled the error monitoring mechanism is disabled.

The output of comparator 73 is provided to a first input of an AND gate 75. A comparator 74 compares the feedback voltage FB to a threshold value and feeds its output to second input of AND gate 75. Comparator 74 and AND gate 75 have the same function as comparator 63 and AND gate 67 of Fig. 6

An output of an AND gate 75 is provided to a blanking filter 76 controlled by parameters OLP.blanking, SCP.blanking. These parameters may set a blanking period such that for a certain time no error signal is generated, and only if the duration of a logic 1 output of AND gate 75 exceeds the blanking time, an error condition is detected. Thus the function of time filter 68 of Fig. 6 is implemented.

In case an error condition is detected, at 77 some protection mechanism may be triggered. For example, the controller may set the power converter to a predefined state, also referred to as latched state. For example, in the power converter of Fig. 3, both high side switch 34 and low side switch 35 may be switched off. In some embodiments, for example when an open loop condition is detected the power converter may also be restarted, or restarted after a certain time.

Fig. 8 is a flowchart illustrating a method according to an embodiment, which essentially corresponds to the operation of the error condition detection explained with reference to Fig. 7. The method of Fig. 8 starts at 80. At 81, a startup of the system occurs.

At 82, variables are initialized. An average voltage Vout_avg is initialized to the current voltage Vout, and Vout is also set to the current Vout. The current Vout is the output voltage as indicated by the measure of the output voltage, measured as explained above.

At 83, the method checks if short circuit monitoring is enabled, corresponding to SCP.en in Fig. 7. If enabled, the method continues at 84 and else at 89.

At 84, the method comprises evaluating if the average voltage Vout_avg minus the current output voltage Vout exceeds the short circuit threshold SCP.threshold, corresponding to the function of comparator 73, and if the feedback voltage is high, corresponding to the function of comparator 74. If both is the case (AND gate 75 of Fig. 7), at 85 a blanking counter is increased. If this not the case, no at 84) the blanking counter is cleared, e.g. reset to zero, at 88.

At 86, the method comprises checking if the counter SCP.blanking_cnt exceeds the SCP.blankingThreshold, corresponding to a time filter. If this is not the case, the method goes to step 89. The same is true after 88. In case of a yes at 86, this means that a short circuit error condition has been detected, and at 87 short circuit protection measures are taken. For example, the power converter may be set to a predefined state, for example switched off state, as explained above.

At 89, the method comprises checking if the open loop monitoring is enabled. If this is not the case, the method proceeds to 815, which imposes a predefined waiting time (for example 100 microseconds) before the method proceeds to 816. The time of 100 microseconds is merely an example, and other time intervals may also be used. At 816, the variable Vout is updated to the current Vout, and the variable Vout_avg is also updated based on any averaging calculation, for example as an average of the last M values of Vout, where M is an integer >1, for example about 5 or 10. At startup, when less than M previous values of Vout are available, all available values may be used. After the updating at 816, the method jumps back to 83.

If the open loop monitoring is enabled (yes at 89), at 810 comparisons corresponding to 84 are performed, using the OLP.threshold. To account for the different signs of the slopes (see Fig. 5), here the difference is reversed, i.e. Vout-Vout _avg has to be greater than OLP.threshold, whereas at 84 Vout_avg-Vout has to be greater than SCP.threshold.

If the comparison at 86 results in a difference above the threshold and the feedback voltage is high, the method proceeds to 811 with increasing an open loop blanking counter OLP.blanking_cnt, similar to increasing the counter for short circuit at 85. In case of a no at 810, at 814 the open loop counter is cleared, for example set to 0. After 814, the method proceeds at 815.

After the increasing at 811, the method checks at 812 if the counter OLP.blanking_cnt is above or at the respective threshold OLP.blankingThreshold. If yes, an open loop error condition has been detected, and at 813 corresponding protection measures, for example a restart of the system or also a setting to a predefined state, is performed. If no at 812, the method proceeds at 815. Therefore, in the method of Fig. 8 both for the short circuit case and for the open loop case, the corresponding condition (84 and 810) has to persist over a number of cycles given by the respective blanking threshold, before the respective error condition is determined. It should be noted that while Fig. 8 shows both short circuit and open loop cases, in other embodiments only one of these cases may be implemented.

Figs. 9 and 10 illustrate effects which may occur in conventional error monitoring using simple voltage thresholds without using the slope, which may be fully or partially avoided with the techniques discussed herein.

Fig. 9 illustrates a case where a converter like the one shown in Fig. 3 is operated with a PWM signal to generate an output voltage Vout based on a bus voltage Vbus, which may be generated by a power factor correction stage like stage 30 of Fig. 3.

At a point in time indicated by an arrow 92, for example an open loop condition occurs. As discussed, this results in a feedback requesting a higher Vout. At the same time, due to the increased demand for Vout, the bus voltage increases as indicated by a dashed line 90. At a point in time illustrated by line 93, as also marked by 91, a so-called dynamic brownout may be triggered, which leads to an auto-restart. However, for overvoltage protection a latched state would be needed.

However, if the output voltage Vout is comparatively low, a threshold for overvoltage protection may not be reached. On the primary side, it may be that the primary side controller has no information about the desired output voltage and cannot adjust a threshold level accordingly. On the other hand, a secondary side controller cannot give information to the primary side as the feedback does not work in an open loop condition, and such that for example a latching on the primary side is not possible.

Fig. 10 shows a short circuit case. A curve 101 shows the behaviour of the output voltage at a short circuit occurring at a point in time marked by an arrow 100. Here, a rapid decrease of the output voltage occurs, as indicated by a curve 101. A normal change of the output voltage to a lower level, which may occur in power converters supporting multiple output voltages, is shown by a curve 102.

If the short circuit detection were implemented by comparing the output voltage with some threshold level, like Vout UVP level illustrated in Fig. 10, it takes a relatively long time for the detection (as the threshold level has to be below the output voltages regularly occurring in the system), which may lead to high component stress as noted at the bottom of Fig. 10.

With techniques discussed herein based on the slope an earlier detection may be obtained, thus avoiding component stress. As can be seen in Fig. 10, the slopes according to curves 101 and 102 differ significantly, such that a distinction based on the slope is possible.

Next, using an indication signal of the output current and a measure of the slope of the output current will be explained in more detail referring to Figs. 11, 12A, 12B and 13. For implementation, the circuit, logic diagrams and flow charts of Figs. 6 to 8 may be modified accordingly using the output current and corresponding thresholds instead of the output voltage and corresponding thresholds.

Fig. 11 shows an example for the output current Iout, the PWM control signal, the output voltage Vout and the feedback voltage $V_{FB}$, where at a time indicated by an arrow 1102 an open output error occurs, which for example occurs if the load is disconnected from the power converter. In this case the output current has a steep negative slope 1100 (as no current can flow), which may be detected e.g. at 1101. At the same time, the feedback voltage VFB goes high, which may be used as an additional criterion for detecting the error condition, similar as has been explained for the output voltage case above. Also, in case of a current regulation, at the open output error the output voltage rises, as the power converter tries to increase the output current by rising the voltage, until the error condition is detected at 1101 and the power converter is e.g. set to a latched state in response thereto.

Figs. 12A and 12B show examples for the output current Iout, the PWM control signal, the feedback voltage $V_{FB}$, and the output Voltage Vout, where at a time indicated by an arrow 1202 an open loop error occurs. Here, the output current exhibits a steep positive slope 1200, which may be detected at 1201, and in response thereto the power converter may be set to a latched state, thus reducing the output current e.g. to zero and preventing overload conditions. The difference between Figs. 12A and 12B is the type of load: In Fig. 12A, the load is a resistive load. In this case, the output Voltage Vout rises at the time indicated by arrow 1202 when the loop error occurs before falling again.

Fig. 13 shows an example for the output current Iout, the PWM control signal, the feedback voltage $V_{FB}$, and the output Voltage Vout, where at a time indicated by an arrow 1302 a short circuit error occurs. Also here, the output current exhibits a steep positive slope 1300, which may be detected at 1301, and in response thereto the power converter may be set to a latched state, thus reducing the output current e.g. to zero and preventing overload conditions. It should be noted that in a case where the output current is regulated to a target output current, the steep positive slope 1300 may still occur, as the current regulation in many implementation may react slower than the timescale on which the steep increase of the current occurs. Therefore, in this case by monitoring the measure of the slope of the output current may enable a faster reaction to the short circuit in some implementations.

In contrast to the open loop error discussed with reference to Figs. 12A and 12B, in case of the short circuit error of Fig. 13 a sharp drop of the output voltage Vout occurs at the time indicated by arrow 1302, similar to Fig. 10. Therefore, if an error condition is detected based on a rise of the output current Iout as in Figs. 12A, 12B and 12C, if desired in a particular implementation the type of error condition (open loop or short circuit) may additionally be determined by evaluating the behaviour of the output voltage Vout (rise following slow decay in Fig. 12A, essentially constant in Fig. 12B, sharp decrease in Fig. 13.

**Claims**

1. A controller (12; 31, 39; 41, 49) for a power converter (10), comprising:

   a terminal (13) configured to receive an indication signal (ind) of one of an output voltage (Vout) or an output current (Iout) of the power converter (10), and
   a control logic (15) configured to derive a measure of a slope of the one of the output voltage (Vout) or output current (Iout) based on the indication signal (ind) of the one of the output voltage (Vout) or output current (Iout), and to detect an error condition of the power converter (10) based on the measure of the slope,

**characterized in that**
   the controller (12; 31, 39; 41, 49) further comprises a terminal (FB) configured to receive a feedback signal indicating if the one of the output voltage (Vout) or output current (Iout) is to be increased or decreased, wherein the control logic (15) is configured to detect the error condition only when the feedback signal is above a predefined threshold (55).

2. The controller (12; 31, 39; 41, 49) of claim 1, wherein the control logic (15) is configured to detect the error condition as an open loop condition (10) of a feedback loop (310, 410) of the power converter in case the measure is a measure of the output voltage (Vout) or one of an open loop condition (10) or a short circuit condition in case the measure is a measure of the output current (Iout) if the slope indicated by the measure of the slope exceeds a positive threshold value.

3. The controller (12; 31, 39; 41, 49) of claim 2, wherein the positive threshold value is selected based on the one of the output voltage (Vout) or output current (Iout) of the power converter (10) indicated by the measure of the one of the output voltage (Vout) or output current (Iout) prior to detecting the error condition.

4. The controller (12; 31, 39; 41, 49) of any one of claims 1 to 3, wherein the control logic (15) is configured to detect the error condition as a short circuit condition at an output of the power converter in case the measure is a measure of the output voltage (Vout) or an open circuit condition at an output of the power converter in case the measure is a measure of the output current (Iout) if the slope indicated by the measure of the slope is below a negative threshold value.

5. The controller (12; 31, 39; 41, 49) of claim 4, wherein the negative threshold value is selected based on the one of the output voltage (Vout) or output current (Iout) of the power converter indicated by the measure of the one of the output voltage (Vout) or output current (Iout) prior to detecting the error condition.

6. The controller (12; 31, 39; 41, 49) of any one of claims 1 to 5, wherein the control logic (15) is configured to detect the error condition only when the one of the output voltage (Vout) or output current (Iot) changes by more than a predefined amount.

7. The controller (12; 31, 39; 41, 49) of any one of claims 1 to 6, wherein the control logic is configured to output an error signal (err) indicating the error condition only if the error condition persists for a predefined time.

8. The controller (12; 31, 39; 41, 49) of any one of claims 1 to 7, wherein the controller (12; 31, 39; 41, 49) is configured to set the power converter to a predefined state based on detecting the error condition.

9. A power converter (10), comprising the controller (12; 31, 39; 41, 49) of any one of claims 1 to 8.

10. The power converter of claim 9, wherein the power converter comprises a primary side and a secondary side galvanically isolated from the primary side, wherein the controller (12; 31, 39; 41, 49) is provided either on the primary side or on the secondary side.

11. A method for operating a power converter (10), comprising:

receiving an indication signal (ind) of one of an output voltage (Vout) or output current (Iout) of the power converter, deriving a measure of a slope of the one of the output voltage (Vout) or output current (Iout) based on the indication signal (ind) of the one of the output voltage (Vout) or output current (Iout), and detecting an error condition of the power converter (10) based on the measure of the slope, **characterized in that** the method further comprises receiving a feedback signal indicating if the one of the output voltage (Vout) or output current (Iout) is to be increased or decreased, wherein detecting the error condition comprises detecting the error condition only when the feedback signal is above a predefined threshold (55).

## Patentansprüche

1. Steuerung (12; 31, 39; 41, 49) für einen Leistungswandler (10), umfassend:

einen Anschluss (13), der konfiguriert ist, um ein Anzeigesignal (ind) von einem von einer Ausgangsspannung (Vout) oder einem Ausgangsstrom (Iout) des Leistungswandlers (10) zu empfangen, und eine Steuerlogik (15), die konfiguriert ist, um ein Maß einer Steigung des einen von der Ausgangsspannung (Vout) oder dem Ausgangsstrom (Iout) basierend auf dem Anzeigesignal (ind) des einen von der Ausgangsspannung (Vout) oder dem Ausgangsstrom (Iout) abzuleiten, und um einen Fehlerzustand des Leistungswandlers (10) basierend auf dem Maß der Steigung zu erfassen, **dadurch gekennzeichnet, dass** die Steuerung (12; 31, 39; 41, 49) ferner einen Anschluss (FB) umfasst, der konfiguriert ist, um ein Rückkopplungssignal zu empfangen, das anzeigt, ob der eine von der Ausgangsspannung (Vout) oder dem Ausgangsstrom (Iout) erhöht oder verringert werden soll, wobei die Steuerlogik (15) konfiguriert ist, um den Fehlerzustand nur zu erfassen, wenn das Rückkopplungssignal über einem vordefinierten Schwellenwert (55) liegt.

2. Steuerung (12; 31, 39; 41, 49) nach Anspruch 1, wobei die Steuerlogik (15) konfiguriert ist, um den Fehlerzustand als einen offenen Schleifenzustand (10) einer Rückkopplungsschleife (310, 410) des Leistungswandlers zu erfassen, falls das Maß ein Maß der Ausgangsspannung (Vout) ist, oder als einen von einem offenen Schleifenzustand (10) oder einem Kurzschlusszustand, falls das Maß ein Maß des Ausgangsstroms (Iout) ist, wenn die Steigung, die durch das Maß der Steigung angezeigt wird, einen positiven Schwellenwert überschreitet.

3. Steuerung (12; 31, 39; 41, 49) nach Anspruch 2, wobei der positive Schwellenwert basierend auf dem einen von der Ausgangsspannung (Vout) oder dem Ausgangsstrom (Iout) des Leistungswandlers (10) ausgewählt wird, der durch das Maß des einen von der Ausgangsspannung (Vout) oder dem Ausgangsstrom (Iout) vor dem Erfassen des Fehlerzustands angezeigt wird.

4. Steuerung (12; 31, 39; 41, 49) nach einem der Ansprüche 1 bis 3, wobei die Steuerlogik (15) konfiguriert ist, um den Fehlerzustand als einen Kurzschlusszustand an einem Ausgang des Leistungswandlers zu erfassen, falls das Maß ein Maß der Ausgangsspannung (Vout) ist, oder als einen offenen Schleifenzustand an einem Ausgang des Leistungswandlers, falls das Maß ein Maß des Ausgangsstroms (Iout) ist, wenn die Steigung, die durch das Maß der Steigung angezeigt wird, unter einem negativen Schwellenwert liegt.

5. Steuerung (12; 31, 39; 41, 49) nach Anspruch 4, wobei der negative Schwellenwert basierend auf dem einen von der Ausgangsspannung (Vout) oder dem Ausgangsstrom (Iout) des Leistungswandlers ausgewählt wird, der durch das Maß des einen von der Ausgangsspannung (Vout) oder dem Ausgangsstrom (Iout) vor dem Erfassen des Fehlerzustands angezeigt wird.

6. Steuerung (12; 31, 39; 41, 49) nach einem der Ansprüche 1 bis 5, wobei die Steuerlogik (15) konfiguriert ist, um den Fehlerzustand nur zu erfassen, wenn sich der eine von der Ausgangsspannung (Vout) oder dem Ausgangsstrom (Iout) um mehr als einen vordefinierten Betrag ändert.

**7.** Steuerung (12; 31, 39; 41, 49) nach einem der Ansprüche 1 bis 6, wobei die Steuerlogik konfiguriert ist, um ein Fehlersignal (err) auszugeben, das den Fehlerzustand nur anzeigt, wenn der Fehlerzustand für eine vordefinierte Zeit andauert.

**8.** Steuerung (12; 31, 39; 41, 49) nach einem der Ansprüche 1 bis 7, wobei die Steuerung (12; 31, 39; 41, 49) konfiguriert ist, um den Leistungswandler basierend auf dem Erfassen des Fehlerzustands in einen vordefinierten Zustand zu versetzen.

**9.** Leistungswandler (10), umfassend die Steuerung (12; 31, 39; 41, 49) nach einem der Ansprüche 1 bis 8.

**10.** Leistungswandler nach Anspruch 9, wobei der Leistungswandler eine Primärseite und eine Sekundärseite, die von der Primärseite galvanisch isoliert ist, umfasst, wobei die Steuerung (12; 31, 39; 41, 49) entweder auf der Primärseite oder auf der Sekundärseite bereitgestellt ist.

**11.** Verfahren zum Betreiben eines Leistungswandlers (10), umfassend:

Empfangen eines Anzeigesignals (ind) von einem von einer Ausgangsspannung (Vout) oder einem Ausgangsstrom (Iout) des Leistungswandlers,
Ableiten eines Maßes einer Steigung des einen von der Ausgangsspannung (Vout) oder dem Ausgangsstrom (Iout) basierend auf dem Anzeigesignal (ind) des einen von der Ausgangsspannung (Vout) oder dem Ausgangsstrom (Iout), und Erfassen eines Fehlerzustands des Leistungswandlers (10) basierend auf dem Maß der Steigung,
**dadurch gekennzeichnet, dass**
das Verfahren ferner das Empfangen eines Rückkopplungssignals umfasst, das anzeigt, ob der eine von der Ausgangsspannung (Vout) oder dem Ausgangsstrom (Iout) erhöht oder verringert werden soll, wobei das Erfassen des Fehlerzustands das Erfassen des Fehlerzustands nur umfasst, wenn das Rückkopplungssignal über einem vordefinierten Schwellenwert (55) liegt.

**Revendications**

**1.** Une unité (12, 31, 39 ; 41, 49) de commande d'un convertisseur (10) de puissance, comprenant :

une borne (13) configurée pour recevoir un signal (ind) d'indication de l'une d'une tension (Vout) de sortie ou d'un courant (Iout) de sortie du convertisseur (10) de puissance, et
une logique (15) de commande configurée pour déduire une mesure d'une pente du un de la tension (Vout) de sortie ou du courant (Iout) de sortie sur la base du signal (ind) d'indication du un de la tension (Vout) de sortie ou du courant (Iout) de sortie, et pour détecter un état d'erreur du convertisseur (10) de puissance sur la base de la mesure de la pente,
**caractérisée en ce que**
l'unité (12 ; 31, 39 ; 41, 49) de commande comprend en outre une borne (FB) configurée pour recevoir un signal de réaction indiquant si le un de la tension (Vout) de sortie ou du courant (Iout) de sortie doit être augmenté ou diminué, dans laquelle la logique (15) de commande est configurée pour détecter l'état d'erreur seulement lorsque le signal de réaction est au-dessus d'un seuil (55) défini à l'avance.

**2.** L'unité (12, 31, 39 ; 41, 49) de commande de la revendication 1, dans laquelle la logique (15) de commande est configurée pour détecter l'état d'erreur sous la forme d'un état (10) ouvert d'une boucle (310, 410) de réaction du convertisseur de puissance, dans le cas où la mesure de la tension (Vout) de sortie ou l'un d'un état (10) en boucle ouverte ou d'un état de court-circuit, dans le cas où la mesure est une mesure du courant (Iout) de sortie, si la pente indiquée par la mesure de la pente dépasse une valeur de seuil positive.

**3.** L'unité (12, 31, 39 ; 41, 49) de commande de la revendication 2, dans laquelle la valeur de seuil positive est choisie sur la base du un de la tension (Vout) de sortie ou du courant (Iout) de sortie du convertisseur (10) indiqué par la mesure du un de la tension (Vout) de sortie du courant (Iout) de sortie avant de détecter l'état d'erreur.

**4.** L'unité (12, 31, 39 ; 41, 49) de commande de l'une quelconque des revendications 1 à 3, dans laquelle la logique (15) de commande est configurée pour détecter l'état d'erreur, comme un état de court-circuit à une sortie du convertisseur de puissance, dans le cas où la mesure est une mesure de la tension (Vout) de sortie ou comme un état en circuit ouvert à la sortie du convertisseur de puissance, dans le cas où la mesure est une mesure du courant (Iout) de sortie, si la pente indiquée par la mesure de la pente est en-dessous d'une valeur de seuil négative.

**5.** L'unité (12, 31, 39 ; 41, 49) de commande de la revendication 4, dans laquelle la valeur de seuil négative est choisie sur la base du un de la tension (Vout) de sortie ou du courant (Iout) de sortie du convertisseur de puissance indiqué par la mesure du un de la tension (Vout) de sortie ou du courant (Iout) de sortie avant de détecter l'état d'erreur.

6. L'unité (12, 31, 39 ; 41, 49) de commande de l'une quelconque des revendications 1 à 5, dans laquelle la logique (15) de commande est configurée pour détecter l'état d'erreur, seulement lorsque le un de la tension (Vout) de sortie ou du courant (Iout) de sortie change de plus d'une quantité définie à l'avance.

7. L'unité (12, 31, 39 ; 41, 49) de commande de l'une quelconque des revendications 1 à 6, dans laquelle la logique de commande est configurée pour créer un signal (err) d'erreur indiquant l'état d'erreur seulement si l'état d'erreur persiste pendant un temps défini à l'avance.

8. L'unité (12, 31, 39 ; 41, 49) de commande de l'une quelconque des revendications 1 à 7, dans laquelle l'unité (12 ; 31, 39 ; 41, 49) est configurée pour mettre le convertisseur de puissance à un état défini à l'avance sur la base de la détection de l'état d'erreur.

9. Un convertisseur (10) de puissance, comprenant l'unité (12 ; 31, 39 ; 41, 49) de puissance suivant l'une quelconque des revendications 1 à 8.

10. Le convertisseur de puissance de la revendication 9, dans lequel le convertisseur de puissance comprend un côté primaire et un côté secondaire isolé galvaniquement du côté primaire, dans lequel l'unité (12 ; 31, 39 ; 41, 49) de commande est prévue soit du côté primaire soit du côté secondaire.

11. Un procédé pour faire fonctionner un convertisseur (10) de puissance, comprenant :

recevoir un signal (ind) d'indication de l'un d'une tension (Vout) de sortie ou d'un courant (Iout) de sortie du convertisseur de puissance,
déduire une mesure d'une pente de la tension (Vout) de sortie ou du courant (Iout) de sortie sur la base du signal (ind) d'indication du un de la tension (Vout) de sortie ou du courant (Iout) de sortie, et
détecter un état d'erreur du convertisseur (10) de puissance sur la base de la mesure de la pente,
**caractérisé en ce que**
le procédé comprend en outre recevoir un signal de réaction indiquant si le un de la tension (Vout) de sortie ou du courant (Iout) de sortie doit être augmenté ou diminué, dans lequel détecter l'état d'erreur comprend détecter l'état d'erreur seulement lorsque le signal de réaction est au-dessus d'un seuil (55) défini à l'avance.

Power converter circuit

Vin

Vout, Iout

11

10

ind

13

ctrl

14

16

12

Control logic

err

15

# Fig. 1

Receive indication of output signal (voltage or current)

20

Derive measure of slope

21

Detect error condition

22

# Fig. 2

Fig. 3

Fig. 4

Fig. 5

Fig. 6

Fig. 7

Fig. 8

**Fig. 9**

**Fig. 10**

Fig. 11

Fig. 12A

EP 4 340 195 B1

Fig. 12B

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017163144 A1
- US 2010315843 A1
- US 2010110593 A1